# EUROPEAN PATENT SPECIFICATION

(11) **EP 3 106 434 B1**
(45) Date of publication and mention of the grant of the patent: **27.03.2024**
(21) Application number: 15748804.0
(22) Date of filing: 12.02.2015
(51) Int. Cl.: B08B 5/02, C01B 33/02

(54) **DEVICE FOR PRODUCING CLEANED CRUSHED PRODUCT OF POLYCRYSTALLINE SILICON BLOCKS, AND METHOD FOR PRODUCING CLEANED CRUSHED PRODUCT OF POLYCRYSTALLINE SILICON BLOCKS USING SAME**
VORRICHTUNG ZUR HERSTELLUNG EINES GEREINIGTEN ZERKLEINERTEN PRODUKTS AUS POLYKRISTALLINEN SILICIUMBLÖCKEN UND VERFAHREN ZUR HERSTELLUNG EINES GEREINIGTEN ZERKLEINERTEN PRODUKTS AUS POLYKRISTALLINEN SILICIUMBLÖCKEN DAMIT
DISPOSITIF DE PRODUCTION D'UN PRODUIT BROYÉ NETTOYÉ DE BLOCS DE SILICIUM POLYCRISTALLIN, ET PROCÉDÉ ASSOCIÉ DE PRODUCTION D'UN PRODUIT BROYÉ NETTOYÉ DE BLOCS DE SILICIUM POLYCRISTALLIN

(30) Priority: 14.02.2014 JP 2014026622; 16.07.2014 JP 2014145563
(43) Date of publication of application: 21.12.2016
(73) Proprietor: Tokuyama Corporation, Shunan-shi, Yamaguchi 745-8648 (JP)
(72) Inventor: NISHIMURA, Shigeki, Shunan-shi Yamaguchi 745-8648 (JP); FUJII, Masami, Shunan-shi Yamaguchi 745-8648 (JP); KAWAGUCHI, Kazuhiro, Shunan-shi Yamaguchi 745-8648 (JP); YOSHIMATSU, Nobuaki, Shunan-shi Yamaguchi 745-8648 (JP); ASANO, Tetsurou, Shunan-shi Yamaguchi 745-8648 (JP)
(74) Representative: Canzler & Bergmeier Patentanwälte Partnerschaft mbB
(86) International application number: PCT/JP2015/053816
(87) International publication number: WO 2015/122455

(56) References cited:
- WO-A1-2005/064663
- DE-A1-102007 025 250
- JP-A- 2012 046 412
- JP-A- 2012 062 206
- US-A- 4 727 614
- US-A- 5 186 311
- US-A- 5 546 631
- US-A1- 2010 071 728

## Description

### TECHNICAL FIELD

The present invention relates to the device for producing cleaned crushed polycrystalline blocks, and relates to a method for producing cleaned crushed polycrystalline blocks using said devices.

### DESCRIPTION OF THE RELATED ART

A silicon wafer used for the production of the semiconductor device and solar battery or so is generally produced by the method described in below using polycrystalline silicon blocks of rod shape by Siemens method. That is, after this silicon blocks are crushed, these are classified into a piece having a size about a fist, the obtained crushed polycrystalline silicon blocks is used as the source material to generate a silicon ingot having a column shape by Czochralski method, then said silicon ingot is sliced and ground, thereby a wafer is obtained.

The crushing of the polycrystalline silicon blocks mentioned in the above is generally carried out manually using hammer or so. Also, in order to obtain large amount of crushed silicon blocks efficiently, in addition to the manual crushing by hammer, the crushing may be done using a crusher so called a jaw crusher which is generally used for crushing ores. Here, the material of the hammer, and the material of two metal plates (jaw) having a projections which is the crushing parts of the jaw crusher is a high-hardness metal including tungsten carbide and titanium or so; however fine powders of these metals cannot be avoided from being mixed in these obtained crushed products. When such metal fine powders as the impurities remain, this could be a main cause of metal contamination during the silicon ingot production by Czochralski method.

Also, for the crushing of the polycrystalline silicon blocks using above mentioned hammer and jaw crusher or so, a large amount of the fine powders of the polycrystalline silicon having a small particle diameter (herein after, it may be referred as "silicon fine powders") is also generated. The surface of the fine powders of such polycrystalline silicon has extensive metal contamination during the crushing, and also the fine powders scarcely dissolve when producing the silicon ingot by Czochralski method, thus the productivity of the silicon ingot is lowered. Therefore, for such crushed polycrystalline silicon blocks, the removal of the metal fine powders and the silicon fine powders which are mixed in during the crushing is highly demanded.

On the other hand, as the classification after crushing said polycrystalline silicon blocks, a vibration sieving device which sieves by vibration (for example, see JP Patent Application Laid Open No.2009-532319), a classifier which sieves by the rotation of the rotating cylinder (for example, see JP Patent Application Laid Open No.2004-91321), and also a roller classifier (for example, see JP Patent Application Laid Open No.2012-62206) wherein a belt for conveying the crushed product is made into mesh form, then passing the particles smaller than said mesh are passed through are known. However, the fine powders generated during the crushing are small and have large specific surface area, and they can enter to the complicated space of the crushed polycrystalline silicon blocks, then hooked to the surface of the crushed products, thus the fine powders cannot be removed by the selection using these conventional classifier. Thus, after this step, a complexed etching treatment or so using a special etching agent must be carried out to sufficiently clean the obtained crushed product.

Under such situation, in order to remove the fine powders mixed in the crushed polycrystalline silicon blocks, it has been proposed to apply a compressed air to the crushed products (see [claim 25], [0082] to [0088] of JP Patent Application Laid Open No.2012-46412).

EP 2 423 163 A1, corresponding with JP Patent Application Laid Open No.2012-46412, discloses a device for producing cleaned crushed polycrystalline silicon blocks in accordance with the preamble of claim 1, and a process for the production of polycrystalline silicon, comprising breaking polycrystalline silicon deposited on thin rods in a Siemens reactor into fragments, sorting the fragments into size classes from about 0.5 mm to larger than 45 mm, treating the silicon fragments by means of compressed air or dry ice to remove silicon dust from the fragments, wherein no chemical wet cleaning of the fragments takes place. The air outlets blowing said compressed air can be equipped with a particle filter, positioned as close as possible to the respective air outlet and being smaller than 10 µm, preferably smaller than 0.1 µm and particularly preferably smaller than 0.001 µm."

US 5,186,311 A discloses an apparatus for holding honeycomb core parts down on a conveyor while dust is being cleaned from the cells of the honeycomb by an upper air knife blowing a narrow jet of air down through the honeycomb cells as the part is being carried on a conveyor belt through an exhaust hood, and a pair of upwardly aimed air knives below the conveyor belt blowing two narrow jets of air on both sides of the first air knife through the honeycomb cells. The part is held down on the conveyor belt against the lifting force of the two air jets from the two lower air knives by a floating hold-down mechanism, which is adjustably counterbalanced to control the amount of hold-down force it exerts on the honeycomb part.

WO 2005/064663 A1 discloses an ultraviolet ray cleaning device for cleaning a to-be-treated object being conveyed by irradiation of ultraviolet rays on the object from an ultraviolet ray lamp. The ultraviolet ray cleaning device is characterized by having a gas supply route constructed such that a gas is blown on an ultraviolet ray irradiation surface of the object after passing through a gas diffusion plate.

### DISCLOSURE OF INVENTION

### PROBLEM TO BE SOLVED BY THE INVENTION

In order to remove the fine powders by blowing the above mentioned compressed air, JP Patent Application Laid Open No.2012-46412 only discloses to blow the compressed air immediately after the crushing and/or after the classification; and it does not describe what kind of the device structure is used within the classification and conveying line of after the crushing. Therefore, it was not possible to carry out this process efficiently, thus the sufficient cleaning of the crushed product were not easily attained.

In view of such situation, the object of the present invention is to provide the device which can efficiently remove the fine powders such as the metal fine powders or the silicon fine powders or so which are mixed after the crushing of the polycrystalline silicon blocks, using the air blowing or so, and also the method for production thereof.

### MEANS FOR SOLVING THE PROBLEM

The present inventors have carried out keen examination to attain the above mentioned object. As a result, the present inventors have found that the above object can be attained by the structure of device provided with gas blowers at least on above the travel surface of the conveying belt when conveying the crushed polycrystalline silicone blocks by a conveyor, and also provided with a scattering prevention mesh for the crushed polycrystalline silicon blocks between the travel surface of the conveying belt and the gas blower provided above the travel surface; thereby the present invention was attained.

That is, the present is invention is a device for producing cleaned crushed polycrystalline silicon blocks according to the features of claim 1.

Also, the present invention provides a method of producing cleaned crushed polycrystalline silicon blocks using the above mentioned device according to claim 10.

### EFFECT OF THE INVENTION

According to the device for producing the crushed polycrystalline silicon blocks of the present invention, when conveying the crushed polycrystalline silicon blocks by the conveyor, due to the gas blown from the gas blower provided at least above the travel surface of the conveying belt, the fine powders mixed in the crushed products are efficiently blown away; thereby the crushed product can be cleaned.

Here, in case the gas blown from the above unevenly contacts the crushed polycrystalline silicon blocks which are mounted on the conveying belt; then the crushed products may scatter, and in case the crushed products scatters too much, the crushed product may fall out of the conveying belt. However, in the device according to the present invention, the scattering prevention mesh for such crushed polycrystalline silicon blocks is provided between the travel surface of the conveying belt and the gas blower for the fine powders provided above the travel surface. Thus, such scattering is suppressed to an appropriate level, and the above mentioned problems can be prevented. Also, the device for producing the crushed polycrystalline silicon blocks wherein the conveying belt of the conveyor is a mesh form, the mesh form conveying belt allows the gas from the gas blowers to pass through, thereby the crushed polycrystalline silicon blocks can be prevented from scattering too much. Note that, by blowing the appropriate strength of gas to the crushed polycrystalline silicon products while suppressing the excessive scattering, the crushed polycrystalline silicon blocks on the conveying belt can make preferable movement and rotation. Thereby, the gas from the gas blowers can be applied to the entire surface of the crushed polycrystalline silicon blocks, hence such device for producing the crushed polycrystalline silicon blocks can efficiently remove the fine powders.

Further, in regards with the device for producing such polycrystalline silicon blocks, when the conveying belt of the conveyor is a mesh form, and the gas blowers for blowing the fine powders mixed with the crushed polycrystalline silicon blocks are also provided below the travel surface of the mesh form conveying belt, the movement and the rotation of the polycrystalline silicon blocks is activated due to the gas blown from below the travel surface of said mesh form conveying belt. Thereby, the gas is applied to the entire crushed product. As a result, the removal efficiency of the fine powders, particularly the removal efficiency of the fine powders attached to the lower surface of the crushed polycrystalline silicon blocks is enhanced, thus it is preferable.

In this embodiment, due to the gas blown from below, the scattering of the crushed polycrystalline silicon blocks will be even more prominent, thus the effect of the preventing the crushed product from falling out of the conveying belt by the scattering prevention mesh of the crushed polycrystalline silicon blocks is particularly effective, thus it is preferable. Furthermore, the crushed polycrystalline silicon blocks are prevented from coming up to the position too high from the travel surface of the conveying belt by the gas blown from below due to such scattering prevention mesh. Therefore, the air from below is not weakened against the lower surface of the crushed product when contacting the lower surface of the crushed product, and the removal efficiency of the fine powders is not reduced as well.

Therefore, according to the device of the present invention, the cleaned crushed polycrystalline silicon blocks can be easily produced wherein the mixing of the fine powders such as the metal fine powder impurities or the fine powders of the polycrystalline silicon when crushing the polycrystalline silicon blocks are greatly reduced.

### BRIEF DESCRIPTION OF THE DRAWINGS

- **Fig. 1**: Fig. 1 is the vertical cross section in the running direction of the conveyor showing the representative schematic embodiment of the device for producing the cleaned crushed polycrystalline silicon blocks of the present invention.
- **Fig. 2**: Fig. 2 is the figure showing the vertical end plane of A-A line of the device for producing the cleaned crushed polycrystalline silicon blocks of Fig. 1.
- **Fig. 3**: Fig. 3 is the vertical cross section in the running direction of the conveyor showing other embodiment of the device for producing the cleaned crushed polycrystalline silicon blocks.
- **Fig. 4**: Fig. 4 is the view of the vertical end plane of A-A line of the device for producing the cleaned crushed polycrystalline silicon blocks of Fig. 3.
- **Fig. 5**: Fig. 5 is the enlarged plane view showing a part of the conveying belt 2 having a mesh form of the conveyor 1 of the device for producing the cleaned crushed polycrystalline silicon blocks of Fig. 3.
- **Fig. 6**: Fig. 6 is the vertical cross section in the running direction of the conveyor showing other embodiment of the device for producing the cleaned crushed polycrystalline silicon blocks of the present invention.
- **Fig. 7**: Fig. 7 is the vertical cross section showing the embodiment wherein the ionized gas discharger for removing the static electricity of the crushed polycrystalline silicon blocks is provided at further upstream than one gas blower for the fine powders which is provided at the most upstream of the travel surface of the conveying belt.

### THE EMBODIMENTS TO CARRY OUT THE INVENTION

According to the production device of the present invention, the crushed polycrystalline silicon blocks produced by Siemens method is subjected to a removal of the fine powders mixed in the crushed products, thereby carries out the cleaning. Here, Siemens method is the method of carrying out the vapor deposition by CVD (Chemical Vapor Deposition) method of the polycrystalline silicon to the surface of the silicon core wire by contacting the heated silicon core wire with the silane source gas such as trichlorosilane or monosilane or so.

The crushing of the polycrystalline silicon blocks produced by such Siemens method is carried out by manual crushing using hammer or so, or by mechanical crushing using crusher such as jaw crusher or so. Of course, said two means can be combined, that is the coarse crushing of the polycrystalline silicon blocks by hammer is carried out first, and then a fine crushing of the obtained coarsely crushed products by crusher such as the jaw crusher or so is carried out.

In the crushed products of these polycrystalline silicon blocks, the fine powders of the polycrystalline silicon are mixed in, and in some cases the metal fine powders may be mixed in as well. The material of the above mentioned hammer, and the crushing part of the jaw crusher are, for example, a high hardness metal such as super hard alloy wherein tungsten carbide and cobalt as the binder are mix sintered. However, in the above mentioned crushed product of the polycrystalline silicon blocks, the metal fine powders as the impurities such as tungsten and cobalt, titanium, iron, nickel, chromium and copper or so which are derived from the metal material tends to be easily mixed in together with the silicon fine powders. These fine powders refer to the powder form having fine particle diameter which can pass through 500 µm mesh filter.

The crushed polycrystalline silicon blocks obtained as such may be cleaned directly by the device of the present invention, however the crushed polycrystalline silicon blocks are classified in various particle sizes depending on the purpose of use, hence it is preferable to first classify and then clean. Specifically the cleaned crushed polycrystalline silicon blocks is classified so that a group whose long diameter of 90 mass% accumulation at least satisfies the range of 2 to 160 mm. Particularly, it is preferably classified so that a group whose long diameter of 90 mass% accumulation at least satisfies the range of 90 to 160 mm, a group whose long diameter of 90 mass% accumulation at least satisfies the range of 10 to 120 mm, a group whose long diameter of 90 mass% accumulation at least satisfies the range of 10 to 60 mm, or a group whose long diameter of 90 mass% at least satisfies 2 to 10 mm or so.

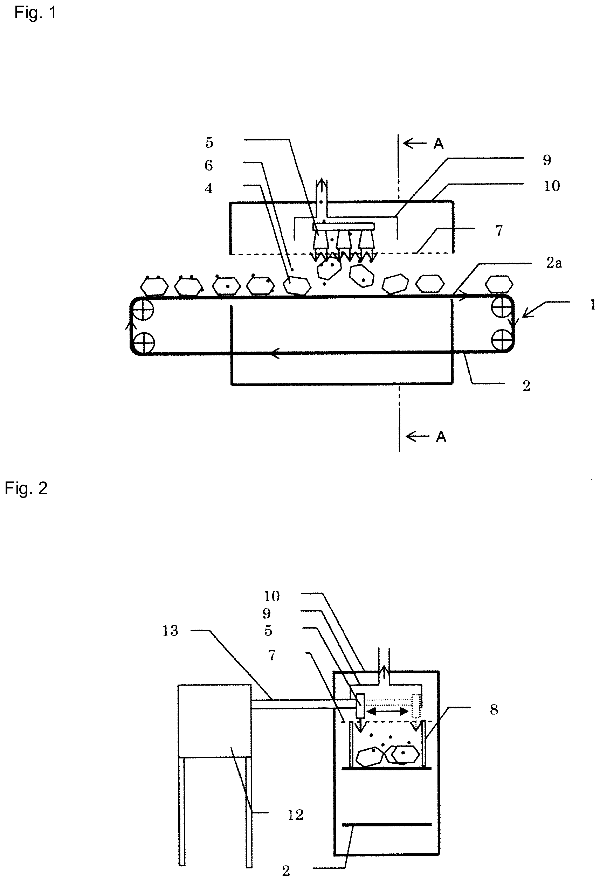

Said classification can be carried out by using the conventional classifiers alone or by combining those, such as a vibration sieving device which sieves using a vibration, a classifier which sieves by the rotation of the rotating cylinder, and also a roller classifier or so. The aforementioned classification cannot carry out sufficient removal of the metal fine powders or the silicon fine powders which are generated during the crushing of the polycrystalline silicon blocks. The device of the present invention efficiently removes fine powders mixed in the crushed products of the polycrystalline silicon blocks. Hereinafter, the device for producing the cleaned crushed polycrystalline silicon blocks according to the present invention will be described using Figs. 1 and 2 which are the vertical cross section showing the schematic view of the representative embodiment.

That is, in the device shown in Fig. 1 and Fig. 2, "1" is the conveyor of the polycrystalline silicon blocks, and the conveying belt 2 runs substantially horizontally in the main device. On the upper surface of this conveying belt 2, the crushed polycrystalline silicon blocks 4 are mounted.

The material of the conveying belt 2 is not particularly limited, and it may be made of metal or resin; however the conveying belt 2 is preferably made of resin due to low contamination, and particularly preferably the conveying belt 2 is made of the mixed resin of fluorocarbon resin with glass fiber, aramid fiber, polyurethane, polyethylene, polypropylene or so from the point of the mechanical strength and durability. Also, these resins may be coated with fluorocarbon resin.

The gas blowers 5 for the fine powders are provided above the travel surface of the conveying belt 2. The gas blowers 5 may be provided at least one position above the travel surface of the conveying belt 2 with respect to the running direction of the conveying belt 2; however from the point of improving the removal efficiency of the fine powders 6, preferably these are provided at 2 positions or more. In accordance with the invention, a gas blower 5 placed above the travel surface of the conveying belt blows the gas to the entire area in the width direction of the belt at the position placed along the running direction of the conveying belt 2. Such is difficult to accomplish just by a single injection nozzle, thus preferably a plurality of injection nozzles is provided in the width direction of the conveying belt 2. Also, from this point of view, the gas blowers 5 preferably comprise a nozzle header installed with the plurality of the blower nozzles along the longitudinal direction of the header which supplies the gas, or the slit nozzle headers of which the plurality of the slits for the gas blowers are opened.

Further, when only one or just few gas blowers 5 are provided with respect to the width direction of the belt, and thus the gas can only be blown from such positions to certain parts along the width direction of the belt, then the gas blowers 5 may have a structure which moves along the width direction of the conveying belt 2 while blowing the gas, thereby allowing the gas to be blown on the entire area in the width direction of the belt. That is, Fig. 2 is the figure showing the vertical end plane along A-A line of the device for producing the cleaned crushed polycrystalline silicon blocks of Fig. 1, and the gas blowers 5 are placed at three different positions along the running direction of the conveying belt 2; but all of them are placed at the left end with respect to the running direction of the belt along the width direction of the belt. However, in this device, each gas blowers 5 are provided at the tip of the extendible supporting axis 13 which extends in the horizontal direction from the movable unit 12 of the gas blower 5 which is provided with the conveyor, and by extending this extendible supporting axis 13 in the horizontal direction, the gas of the gas blower can reach to the right end with respect to the width direction of the belt.

The movement of this gas blower in the width direction of the conveying belt 2 is preferably done at sufficiently fast speed so that the crushed polycrystalline silicon blocks do not move away from the gas blowing area before the gas blowers 5 reach thereto in running conveying belt 2. Also, the gas blowers 5 preferably make back and forth movement in the width direction of the conveying belt 2, and in such case, the back and forth movement is preferably done at the speed so that when one back and forth movement is made, the gas blowing area of the starting point and the finishing point has an overlapping area.

Note that, as the gas blown from the gas blower 5 for the crushed fine powders, inactive gas such as helium and nitrogen or so may be mentioned other than the clean air.

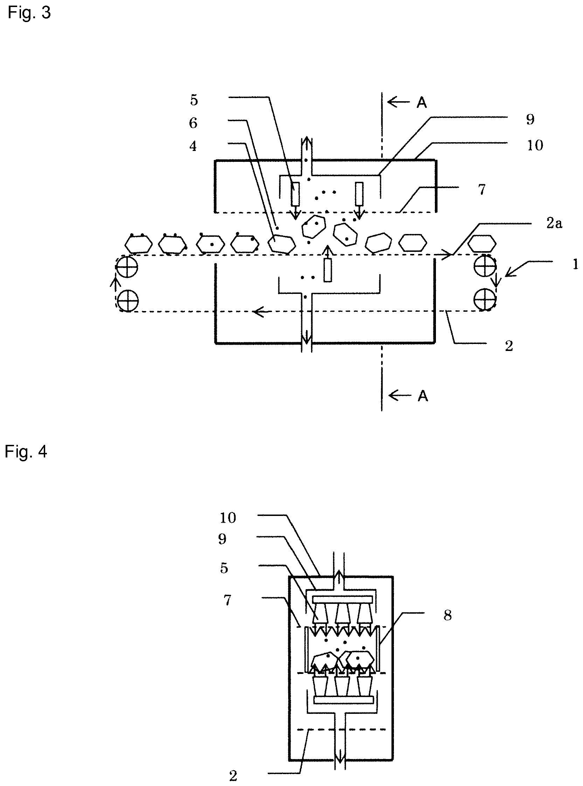

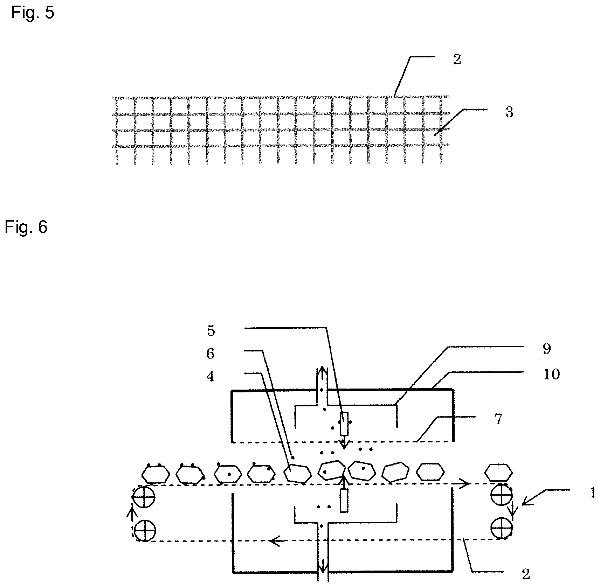

As the preferable embodiment of the present invention, the production device of the crushed polycrystalline silicon blocks has a mesh form conveying belt 2 of the conveyor, and further the gas blower 5 for the fine powders mixed in the crushed polycrystalline silicon blocks are provided not only above but also below the travel surface of the conveying belt; thereby the removal efficiency of the fine powders, particularly the removal efficiency of the fine powders adhered to the lower surface of the crushed polycrystalline silicon blocks is enhanced, thus it is preferable. This embodiment will be described by referring to Figs. 3 to 6 showing the schematic diagram thereof. The conveying belt 2 is a mesh form as shown in enlarged plane view of Fig. 5, and at the cross section thereof, numerous opening parts 3 in vertical direction are formed as the mesh.

The size of this opening part 3 is required to be smaller than the particle size of the crushed polycrystalline silicon blocks mounted on the upper surface of the opening part 3. In case the condition that the long diameter of 90 mass% accumulation of the crushed polycrystalline silicon blocks 4 mounted on the upper surface of the conveying belt 2 being within the range of 90 to 160 mm is at least satisfied, the size of the opening part of the conveying belt 2 is preferably 10 to 80 mm. When the condition that the long diameter of 90 mass% accumulation of the crushed polycrystalline silicon blocks being within the range of 10 to 120 mm is at least satisfied, the preferable size of the opening part of the conveying belt 2 is 2 to 8 mm. When the condition that the long diameter of 90 mass% accumulation of the crushed polycrystalline silicon blocks being within the range of 10 to 60 mm is at least satisfied, the preferable size of the opening part of the conveying belt 2 is 2 to 8 mm. Further, when the condition that the long diameter of 90 mass% accumulation of the crushed polycrystalline silicon blocks being within the range of 2 to 10 mm is at least satisfied, the preferable size of the opening part of the conveying belt 2 is 0.5 to 1.5 mm.

Not only the gas blowers 5 for the fine powders provided above the travel surface of the conveying belt 2, but also the gas blowers 5 provided below the travel surface are not limited to one and two. More may be provided.

As the vertical cross section of the device in Fig. 6 shows, the gas blowers 5 according to the present invention are preferably provided above and below of the travel surface of the mesh form conveying belt at the same positions along the running direction thereof. In such case, the travelling distance of the cleaning device can be shortened and the device can be made compact; and also because the gas pushes from top, the crushed polycrystalline silicon blocks can be suppressed from floating, thus the cleaning can be done efficiently. In case of providing the gas blowers 5 above and below the travel surface of the conveying belt 2 at two or more positions along the running direction of the conveying belt, at least one gas blower 5 may be provided at the same position at above and below the travel surface, and the rest of these may be provided at different positions.

Further according to the present invention, for the particularly preferable embodiment of mounting the gas blowers 5 for the fine powders, which is shown in the vertical cross section of the device of Fig. 3, first they are provided above the travel surface at the upstream of the running direction of the conveying belt 2, then they are provided below the travel surface at the downstream therefrom, and at further downstream therefrom, they are provided above the travel surface again. That is, for the removal of the fine powders 6 by blowing the gas to each crushed polycrystalline silicon blocks 4 on the conveying belt 2, the removal efficiency of the gas blowing from below which is against the gravity is lower than that of gas blowing from above. Therefore, first the gas is blown from above to remove the fine powders 6 adhered on the upper surface of the crushed products 4, then the gas is blown from below to remove the fine powders 6 adhered on the lower surface of the crushed products 4; and due to this gas from below, the crushed products 4 on the conveying belt 2 is turned over to change the surface contacting the conveying belt 2. Then, the air is again blown from above to remove the fine powders 6 remained on the new upper surface of the crushed products 4 by strong gas from above; thereby the entire surface of the crushed products can be highly cleaned.

Furthermore, addition to this embodiment, in case appropriate distance is taken for the space between each of the gas blowers 5 provided above, below and above of the travel surface along the running direction of the conveying belt 2, depending on the particle size of the cleaned crushed polycrystalline silicon blocks 6, while the crushed polycrystalline silicon blocks 6 mounted on the conveying belt 2, the crushed polycrystalline silicon blocks are blown with the gas from the opposite direction from both above and below respectively. Thereby, the crushed products 6 rotates on the surface of the conveying belt, and even more excellent removal efficiency of the fine powders can be attained, hence it is most preferable. Since such rotational force is applied to the crushed polycrystalline silicon blocks 6, the space between near the gas blowers at above and below may be adjusted depending on the particle size of the crushed polycrystalline silicon blocks to be cleaned. The lower limit of preferable length of space is the longer length of either of 10 mm or the length of 0.3 times (particularly preferably 0.5 times) with respect to average long diameter of said crushed polycrystalline silicon blocks 6. On the other hand, the upper limit of the preferable length of space is the longer length of either of 50 mm or the length of 2.0 times (particularly preferably 1.8 times) with respect to the average long diameter of said crushed polycrystalline silicon blocks 6. Note that the above mentioned average long diameter of the crushed polycrystalline silicon blocks refers to the average value obtained by first selecting arbitrary 300 crushed polycrystalline silicon blocks and then measuring the long dimeter thereof using the caliper.

The height of mounting the above mentioned gas blowers 5 with respect to the travel surface of the conveying belt 2 may be set depending on the strength of the blowing gas and the removal efficiency of the fine powders. Generally, the lower limit of the height from the travel surface is chosen from either higher one of the position which is 0.3 times (particularly preferably 0.5 times) longer than the long diameter of 90 mass% accumulation of the crushed polycrystalline silicon blocks or the position which is 10 mm longer than the length of the long diameter of 90 mass% accumulation of the crushed polycrystalline silicon blocks. On the other hand, the upper limit of the suitable height is chosen from either higher one of the position which is 2.0 times (particularly preferably 1.5 times) longer the long diameter of 90 wt% accumulation of the crushed polycrystalline silicon blocks or the position which is 50 mm longer than the length of the long diameter of 90 mass% accumulation of the crushed polycrystalline silicon blocks. Note that the above mentioned long diameter of 90 mass% accumulation of the crushed polycrystalline silicon blocks refers to a value wherein mass accumulation obtained by first selecting arbitrary 300 crushed polycrystalline silicon blocks then measuring the weight by electronic scale and the long diameter by a caliper is 90%.

As mentioned above, the removal efficiency of the fine powders is lower at the gas blowing from below than the gas blowing from above, thus the gas blowers provided at below is preferably provided closer to the conveying belt 2 than the gas blowers provided above.

Further, in the device of Fig. 1 to 7, the scattering prevention mesh 7 is provided between the travel surface of said conveying belt 2 and the gas blowers 5 are provided above the conveying belt 2. This scattering prevention mesh 7 prevents the crushed products 4 from falling out of the conveying belt which is caused by excessive scattering of the crushed products 4 due to the gas blown from the gas blowers 5. Further, if the crushed products reach to a high position, the gas from the gas blowers 5 at below may not be able to reach to the crushed products 4, thus the removal efficiency of the fine powders 6 adhered on the lower surface of the crushed products 4 may decline; however such problems can be prevented by providing the scattering prevention mesh 7. The scattering of the crushed products 4 becomes even more prominent due the gas blowing from the gas blowers 5 provided below the conveying belt 2. However, as mentioned above, in case that the gas blowers 5 are only provided above the conveying belt 2, if the air is blown unevenly to the crushed products 4, the scattering occurs to a certain degree. Therefore, to prevent the scattering of the crushed products 4 providing the scattering prevention mesh 7 is very important from the point of preventing the crushed products 4 from falling out of said conveying belt.

The size of the opening part and the opening ratio of the mesh property of this scattering prevention mesh 7 is the same as the mesh form conveying belt 2. For example, the opening ratio of the mesh form conveying belt 2 and the scattering prevention mesh 7 can be 30 to 85%. Also, the material thereof may be metal or resin, and specifically the resin made of fluorocarbon resin is particularly preferable.

The scattering prevention mesh 7 is appropriately provided at the position between the travel surface 2a of the conveying belt 2 and the height where the gas blowers are provided above the conveying belt 2. The scattering prevention mesh 7 may be provided so that the excessive scattering of the crushed polycrystalline silicon blocks can be prevented, and also provided at the position which can attain the object of providing the scattering prevention mesh 7 that is at the position which can maintain the high removal efficiency of the fine powders 6 adhered to the lower surface of the crushed products 4. When the gas blowers 5 are provided at the lowest height of the limit, the scattering prevention mesh is to be provided below and close to the gas blowers 5, which is substantially at the same height. When the gas blower 5 is provided at the position, with respect to the travel surface 2a of the conveying belt 2, higher than either of higher point of 1.5 times longer than the long diameter of 90 mass% accumulation of the crushed polycrystalline silicon blocks 6, or 50 mm longer than the length of the long diameter of 90 mass% accumulation of the crushed polycrystalline silicon blocks 6, then the scattering prevention mesh is preferably provided within this higher height.

Note that, in the device of the present invention, besides the scattering prevention mesh 7 provided between the above mentioned travel surface 2a of the conveying belt 2 and the gas blowers 5 provided above the travel surface, in order to prevent the crushed polycrystalline silicon blocks 4 from scattering and falling out of the conveying belt, the vertical plate 8 for preventing the scattering is preferably placed near both side parts of the belt, and along sides thereof.

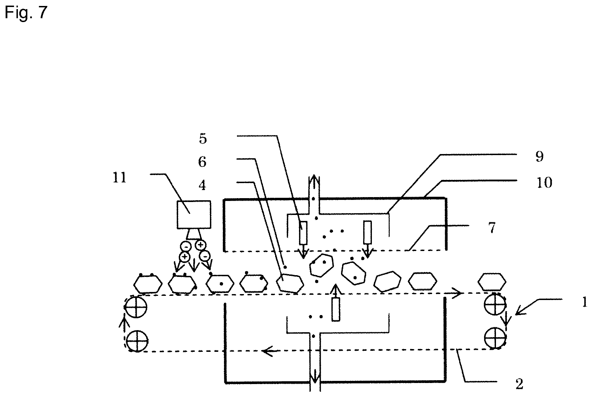

Also, as shown in Fig. 7, at the device for producing the cleaned crushed polycrystalline silicon blocks according to the present invention, the ionized gas discharger 11 for removing the static electricity of the crushed polycrystalline silicon blocks is preferably provided at further upstream along the travel surface of the conveying belt than the gas blower 5 provided at the most upstream among all of the gas blowers 5 provided above and below the conveying belt 2. That is, the fine powders mixed with the crushed polycrystalline silicon blocks are usually charged with static electricity, hence in such case the fine powders are difficult to remove by blowing the gas to said crushed products. Therefore, it is effective to remove the static electricity by exposing to the ionized gas in advance. As for the ionized gas discharger, a corona discharger and a plasma discharger or so can be applied without particular limitation.

Such ionized gas discharger 11 may be provided above or below the conveying belt 2, and preferably it is provided above. Further, these ionized gas dischargers 11 are preferably provided so that the ionized gas is discharged across the entire width of the running conveying belt 2.

As discussed above, in the production device of the present invention, the position where the gas blowers 5 is provided and the part where the gas blown from the blower contacts with the conveying belt 2 are preferably housed in a case 10 comprising the outlet 9 at the wall part. That is, the fine powders 6 blown and removed from the crushed polycrystalline silicon blocks 5 by the blowing gas is sucked from the outlet 9 of the case 10, this is preferable since the room having the device will not be messed with the powders. The outlet 9 may be provided at any wall part of the case 10, however it is preferably provided at the top wall or the bottom wall.

Next, the method of producing the cleaned crushed polycrystalline silicon blocks using the device of the present invention will be described. That is, using the device of the present invention, the gas is blown from the gas blower 5 provided above the conveying belt 2 and if necessary, the gas is blown from below the conveying belt 2 to the crushed polycrystalline silicon blocks 4 mounted on the conveying belt 2 of the conveyor 1. Thereby, the fine powders 6 are efficiently removed, and the cleaned crushed polycrystalline silicon blocks are easily produced.

In this production method, the running speed of the conveying belt 2 of the conveyor 1 is preferably 1 to 15 m/min, and more preferably 2 to 9 m/min. The bulk density of the crushed polycrystalline silicon blocks mounted on the upper surface of the conveying belt 2 may be different depending on the particle size distribution, however generally it is 0.5 to 1.5 g/cm³, and more preferably 0.7 to 1.2 g/cm³.

The gas blown from the gas blower 5 preferably has blowing amount of 8 to 82 L/min per blower opening unit area (mm²), and more preferably of 16 to 60 L/min. The temperature of gas being blown is generally 20 to 25°C. When the condition for blowing the gas is within such preferable range, an excellent removal of the fine powders 6 can be done.

Also, when said ionized gas discharger 11 is provided to the device of the present invention used for this method, the discharging method of this ionized gas is not particularly limited, however in order to sufficiently remove the static electricity from the crushed polycrystalline silicon blocks, it may be carried out accordingly by combining the pulse method with DC type or AC type.

The crushed polycrystalline silicon blocks cleaned as such is significantly reduced of the content of the metal fine powder impurities and the fine powders of the polycrystalline silicon blocks, hence this may be directly used as the source material of the ingot used for Czochralski method. In case the silicon wafer is produced which is used for the semiconductor device by slicing the obtained silicon ingot, and in case high purity is required, the crushed polycrystalline silicon blocks may be used by further carrying out the etching treatment.

Note that, in the production device of the cleaned crushed polycrystalline silicon blocks shown in Fig. 1 to Fig. 7, each embodiment such as the number and the arrangement of the gas blowers 5, whether or not to make the conveying belt 2 to a mesh form, whether or not to provide the scattering prevention mesh 7 or so can be selected accordingly depending on the size of the crushed polycrystalline silicon blocks subjected to the cleaning, or depending on the level of the cleanness required for the crushed polycrystalline silicon blocks. For example, in case the mesh form is used for the conveying belt 2, the gas blowers 5 may only be provided above the conveying belt 2. Also, if the mesh form conveying belt 2 can appropriately prevent the excessive scattering of the crushed polycrystalline silicon blocks caused by the blowing of the gas, the scattering prevention mesh 7 may not be provided.

Further, the shape of the mesh form conveying belt 2 and the scattering prevention mesh 7 are not particularly limited as long as at least part of the gas by the gas blowers 5 can pass through. The device of the present invention may for example be an embodiment wherein the scattering prevention mesh 7 and the conveying belt 2 are combined to form the conveying pathway of a basket form which extends to the conveying direction, and the gas is blown to the crushed polycrystalline silicon blocks conveyed in the basket. Also, the device of the present invention may have an embedment wherein the scattering prevention mesh moves in the conveying direction together with the conveying belt. Also, the embodiment wherein the gas blowers 5 are provided above or below the travel surface 2a of the conveying belt 2 includes the embodiment wherein the gas blowers 5 are provided diagonally above and below the travel surface 2a. Further, in the embodiment wherein the gas blowers 5 are provided above the travel surface 2a includes the embodiment wherein the gas is blown to the crushed polycrystalline silicon blocks on the conveying belt 2 from the sides.

### EXAMPLE

Hereinafter, the present invention will be described further in detail using the examples and the comparative examples; however the present invention is not to be limited thereto. Various physical properties of the present invention were evaluated by the methods described in below.

### (1) Surface metal concentration analysis

For the surface metal concentration analysis, the decomposition and removal of the surface of the crushed polycrystalline silicon blocks was carried out, then a quantitative analysis of each metal element in the sample was carried out by an inductively coupled plasma mass spectrometry (ICP-MS).

### (2) Surface fine powder concentration analysis

About 1 kg of crushed polycrystalline silicon blocks were introduced into 2L beaker, and 1L of ultrapure water was introduced so that said crushed polycrystalline silicon blocks was completely immersed. Then, the beaker was slowly shaken to left and right, thereby the surface of the crushed polycrystalline silicon blocks were completely contacted with the ultrapure water to float the fine powders on the surface in the ultrapure water. The obtained suspension of the fine powders were passed through 500 µm mesh filter, then said fine powders were collected by a filter paper of 1 µm mesh. The collected filter paper was dried in the dry warehouse of 100°C for 12 hours or more, then the weight of the fine powders were calculated from the difference of the weight of the filter paper before and after collecting the fine powders. Then, the concentration of the fine powders was calculated from the weight of the crushed polycrystalline silicon blocks used for this analysis.

### Example 1

Using the device shown in Fig. 3 and Fig. 4, the crushed polycrystalline silicon blocks were cleaned. The crushed polycrystalline silicon blocks subjected to the treatment were obtained by crushing the polycrystalline silicon blocks of the rod shape having the diameter of 120 to 140 mm produced by Siemens method to have the particle diameter (long diameter) of 110 mm or less using the crusher comprising the ultrahard alloy blade; then these are classified to pieces having the average particle diameter of 30 mm and the long diameter range of 8 to 50 mm using the classifier. Also, the long diameter of 90 mass% accumulation of the classified product was 38 mm.

Here, in the device shown in Fig. 3 and Fig. 4, the conveying belt 2 was made of fluorocarbon resin coating of the aramid resin fiber, and it was also a mesh form having the size of the opening part of 4 mm. Also, the gas blowers 5 of the fine powders 6 are provided above the conveying belt at the upstream of the running direction of the conveying belt, and provided below at the downstream therefrom, then it was provided above once again at further downstream. The space in the running direction of the conveying belt of each gas blowers 5 were 50 mm. Also, the height of each gas blowers 5 which were provided above with respect to the travel surface 2a of the conveying belt 2 were 55 mm above the conveying belt 2. Similarly, the height of each gas blowers 5 which were provided below with respect to the travel surface 2a of the conveying belt 2 was 10 mm below the conveying belt 2. Also, at the inside of both ends of the conveying belt 2, the vertical plates 8 for preventing the crushed polycrystalline silicon blocks from jumping out were provided, and the space between these two opposing vertical plates 8 were 100 mm. This space was used as the mounting part of the polycrystalline silicon blocks.

Further, in the device shown in Fig. 3 and Fig. 4, the scattering prevention mesh 7 was made of fluorocarbon resin; and the scattering prevention mesh 7 had a width which encompasses the entire width direction of the running conveying belt, and also had the length which encompasses almost the entire length of the running pathway. The scattering prevention mesh 7 had a mesh of the opening size of 3 mm, and the opening ratio was 72%. The position placed therewith was between the travel surface 2a of the conveying belt 2 and the gas blowers 5 provided above, and at the position 50 mm above the travel surface 2a of the conveying belt 2.

Next, the gas blowing amount from all of the gas blowers 5 were adjusted so that the amount was 16.4 L/min per blower opening unit area (mm²), then 1.5 kg of the above mentioned polycrystalline silicon blocks was placed at the bulk density of 0.8 g/cm³ on the upper surface of the conveying belt 2 of the conveyor 1 of the device shown in Fig. 3. After the aforementioned, the conveying belt 2 was driven at the speed of 3 m/min, and the fine powders removal process was done. The obtained polycrystalline silicon blocks were subjected to the surface metal concentration analysis and the surface fine powders concentration analysis; thereby the level of the cleanness was evaluated. The results are shown in Table 1.

### Example 2

The procedures as same as Example 1 were carried out except that the gas blowing amount from all of the gas blowers 5 were adjusted so that the amount was 32.3 L/min per blower opening unit area (mm²). The obtained polycrystalline silicon blocks were subjected to the surface metal concentration analysis and the surface fine powders concentration analysis; thereby the level of the cleanness was evaluated. The results are shown in Table 1.

### Example 3

The procedures as same as Example 1 were carried out except that the gas blowing amount from all of the gas blowers 5 were adjusted so that the amount was 58.6 L/min per blower opening unit area (mm²). The obtained polycrystalline silicon blocks were subjected to the surface metal concentration analysis and the surface fine powders concentration analysis; thereby the level of the cleanness was evaluated. The results are shown in Table 1.

### Example 4

The procedures as same as Example 1 were carried out except that ionized gas was released by DC type using the device shown in Fig. 7 which is the embodiment providing the corona discharger type ionizer as the ionized gas discharger at further upstream than the gas blower provided at the most upstream of the travel surface of the conveying belt 2 of the device shown in Fig. 3 and Fig. 4. The obtained polycrystalline silicon blocks were subjected to the surface metal concentration analysis and the surface fine powders concentration analysis; thereby the level of the cleanness was evaluated. The results are shown in Table 1.

### Example 5

The procedures as same as Example 1 were carried out except that the gas blower provided above the travel surface of the mesh form conveying belt 2 at the most downstream was removed, and the gas blowers were provided one above and one below at different positions. The obtained polycrystalline silicon blocks were subjected to the surface metal concentration analysis and the surface fine powders concentration analysis; thereby the level of the cleanness was evaluated. The results are shown in Table 1.

### Example 6

The same procedures as Example 1 were carried out except that instead of using the device shown in Fig. 3 and Fig. 4, the device of Fig. 6 was used as the production device of the cleaned crushed polycrystalline silicon blocks, that is the device wherein the gas blowers 5 provided below and above are placed at the same position with respect to the running direction of the mesh form conveying belt was used. The obtained polycrystalline silicon blocks were subjected to the surface metal concentration analysis and the surface fine powders concentration analysis; thereby the level of the cleanness was evaluated. The results are shown in Table 1.

### Example 7

The procedures as same as Example 1 were carried out except that the conveying belt 2 of the device shown in Fig. 3 and Fig. 4 was not a mesh form but was a flat belt without opening parts; and also the gas blower provided above the travel surface of the conveying belt 2 at the most downstream and the gas blower 5 provided below at the upstream therefrom were removed; thus the gas blower 5 at the most upstream was only provided. The obtained polycrystalline silicon blocks were subjected to the surface metal concentration analysis and the surface fine powders concentration analysis; thereby the level of the cleanness was evaluated. The results are shown in Table 1.

### Example 8

As the production device of the cleaned crushed polycrystalline silicon blocks, the device comprising the conveying belt 2 which was a flat belt without the opening parts, and comprising the gas blowers 5 only provided above the conveying belt 2 was used, as shown in Fig. 1 and Fig. 2. The gas blowers 5 in this device were provided above the conveying belt 2 in different positions with respect to the running direction. As shown in Fig. 2, regarding the each position with respect to the running direction, each of these are provided at the left end with respect to the width direction of the conveying belt (inner side than the vertical plate 8 provided at the left side for preventing the scattering of the crushed polycrystalline silicon blocks). Note that the gas blowers 5 were connected to the movable unit 12 of the gas blower provided with the conveyor; and during the cleaning when the conveying belt 2 is running, the gas blowers 5 were moving reciprocally from left end to right end (inner side than the vertical plate 8 provided at the right side for preventing the scattering of the crushed polycrystalline silicon blocks) with respect to the width direction of the conveying belt by extending and shortening the extendible supporting axis 13 at the speed of 30 round trip/ min.

The obtained polycrystalline silicon blocks were subjected to the surface metal concentration analysis and the surface fine powders concentration analysis; thereby the level of the cleanness was evaluated. The results are shown in Table 1.

### Comparative example 1

The crushed polycrystalline silicon blocks were not cleaned and the surface metal concentration analysis and the surface fine powders concentration analysis were carried out, then the level of the cleanness was evaluated. The results are shown in Table 1.

| | Surface metal concentration (pptw) | | | | | | | | | | | | | | | Surface fine powders concentration (ppmw) |
|---|---|---|---|---|---|---|---|---|---|---|---|---|---|---|---|---|
| | Na | Mg | Al | K | Ca | Cr | Fe | Ni | Co | Cu | Zn | W | Ti | Mo | Entire metal | |
| Example 1 | 25 | 7 | 15 | 12 | 181 | 5 | 49 | 3 | 60 | 1 | 91 | 107 | 12 | 1 | 569 | 14 |
| Example 2 | 40 | 9 | 17 | 16 | 152 | 5 | 50 | 3 | 45 | 2 | 78 | 80 | 9 | 1 | 507 | 11 |
| Example 3 | 35 | 6 | 11 | 11 | 122 | 3 | 48 | 2 | 18 | 1 | 65 | 36 | 6 | 1 | 365 | 10 |
| Example 4 | 22 | 7 | 15 | 10 | 181 | 5 | 44 | 3 | 55 | 1 | 86 | 97 | 11 | 1 | 538 | 14 |
| Example 5 | 18 | 5 | 10 | 8 | 179 | 4 | 61 | 3 | 93 | 2 | 175 | 400 | 7 | 1 | 966 | 16 |
| Example 6 | 31 | 9 | 18 | 15 | 140 | 7 | 32 | 4 | 67 | 2 | 116 | 225 | 13 | 1 | 680 | 15 |
| Example 7 | 33 | 11 | 20 | 16 | 193 | 5 | 55 | 3 | 57 | 2 | 137 | 265 | 24 | 1 | 822 | 17 |
| Example 8 | 37 | 9 | 21 | 15 | 184 | 4 | 52 | 3 | 77 | 1 | 144 | 281 | 12 | 1 | 841 | 17 |
| Comparative example 1 | 119 | 19 | 27 | 21 | 356 | 5 | 110 | 3 | 202 | 2 | 329 | 941 | 27 | 1 | 2162 | 24 |

### REFERENCES OF NUMERALS

- 1: Conveyor
- 2: Conveying belt
- 3: Opening part
- 4: Crushed polycrystalline silicon blocks
- 5: Gas blower for the fine powders
- 6: Fine powders
- 7: Scattering prevention mesh for the crushed polycrystalline silicon blocks
- 8: Vertical plate for the preventing the scattering of crushed polycrystalline silicon blocks
- 9: Outlet
- 10: Case
- 11: Ionized gas discharger
- 12: Movable unit of gas blower
- 13: Extendible supporting axis

## Claims

1. A device for producing cleaned crushed polycrystalline silicon blocks (4) comprising,
a) a conveyor (1) for crushed polycrystalline silicon blocks (4), and
b) a gas blower (5) placed above a travel surface (2a) of a conveying belt (2) of said conveyor (1), and said gas blower (5) is for blowing away fine powders mixed in the crushed polycrystalline silicon blocks (4),
c) a scattering prevention mesh (7) for said crushed polycrystalline silicon blocks (4) which is placed between said travel surface (2a) of said conveying belt (2) and the gas blower (5) placed above the travel surface (2a), said scattering prevention mesh (7) being arranged so that the crushed polycrystalline silicon blocks (4) can scatter on the conveying belt (2) due to the gas blown from said gas blower (5) and such as to prevent the crushed polycrystalline silicon blocks (4) from falling out of the conveying belt (2),
**characterized in that** said gas blower (5) is arranged such that the gas blower (5) blows the gas through the scattering prevention mesh (7) to the entire area in the width direction of the belt (2).

2. The device for producing cleaned crushed polycrystalline silicon blocks (4) as set forth in claim 1, wherein said conveying belt (2) is a mesh form.

3. The device for producing cleaned crushed polycrystalline silicon blocks (4) as set forth in claim 2, wherein another gas blower (5) is placed below said travel surface (2a) of said conveying belt (2) of mesh form.

4. The device for producing cleaned crushed polycrystalline silicon blocks (4) as set forth in claim 3, wherein said gas blowers (5) are placed at least at three positions as first one of them is placed above said travel surface (2a) at upstream of running direction of said conveying belt (2), and second one of them is placed below said travel surface (2a) at downstream therefrom, and third one of them is placed above said travel surface (2a) at further downstream therefrom.

5. The device for producing cleaned crushed polycrystalline silicon blocks (4) as set forth in any one of claims 2 to 4, wherein at least one gas blower (5) is respectively placed above and below of said travel surface (2a) of said conveying belt (2) at the same positions with respect to the running direction of said conveying belt (2).

6. The device for producing cleaned crushed polycrystalline silicon blocks (4) as set forth in any one of claims 1 to 5 comprising a mechanism to move said gas blower (5) in the width direction of said conveying belt (2) while blowing the gas.

7. The device for producing cleaned crushed polycrystalline silicon blocks (4) as set forth in any one of claims 1 to 6, wherein said gas blowers (5) have the blowing amount per blower opening unit area, measured in mm², of 8 to 82 L/min.

8. The device for producing cleaned crushed polycrystalline silicon blocks (4) as set forth in any one of claims 3 to 5 or 7, wherein an ionized gas discharger (11) for removing the static electricity of the crushed polycrystalline silicon blocks (4) is placed at further upstream than said gas blowers (5) in the running direction of said conveying belt (2).

9. The device for producing cleaned crushed polycrystalline silicon blocks as set forth in any one of claims 3 to 5, 7 or 8, wherein at a position where said gas blowers (5) are placed, and at a part where a gas from said gas blowers (5) contacts to said conveying belt (2) are housed in a case (10) comprising an outlet (9) at a wall part.

10. A method of producing cleaned crushed polycrystalline silicon blocks (4) using the device for producing cleaned crushed polycrystalline silicon blocks as set forth in any one of claims 1 to 9 comprising a step of blowing a gas to said crushed polycrystalline silicon blocks (4) placed on running conveying belt (2), and removing said fine powders mixed in the crushed polycrystalline silicon blocks (4).

## Patentansprüche

1. Vorrichtung zur Herstellung von gereinigten zerkleinerten polykristallinen Siliziumblöcken (4), umfassend
a) einen Förderer (1) für zerkleinerte polykristalline Siliziumblöcke (4), und
b) einen Gasbläser (5), der über einer Lauffläche (2a) eines Förderbands (2) des Förderers (1) angeordnet ist, und wobei der Gasbläser (5) zum Wegblasen von Feinpulvern, welche mit den zerkleinerten polykristallinen Siliziumblöcken (4) vermischt sind, dient,
c) ein Streupräventionsgitter (7) für die zerkleinerten polykristallinen Siliziumblöcke (4), welches zwischen der Lauffläche (2a) des Förderbands (2) und dem Gasbläser (5), der über der Lauffläche (2a) angeordnet ist, angeordnet ist, wobei das Streupräventionsgitter (7) derart angeordnet ist, dass sich die zerkleinerten polykristallinen Siliziumblöcke (4) auf dem Förderband (2) aufgrund des Gases, welches von dem Gasbläser (5) geblasen wird, verteilen können, und derart, dass verhindert wird, dass die zerkleinerten polykristallinen Siliziumblöcke (4) vom Förderband (2) fallen,
**dadurch gekennzeichnet, dass** der Gasbläser (5) so angeordnet ist, dass der Gasbläser (5) das Gas durch das Streupräventionsgitter (7) auf die gesamte Fläche in der Breitenrichtung des Bands (2) bläst.

2. Vorrichtung zur Herstellung von gereinigten zerkleinerten polykristallinen Siliziumblöcken (4) nach Anspruch 1, wobei das Förderband (2) eine Gitterform aufweist.

3. Vorrichtung zur Herstellung von gereinigten zerkleinerten polykristallinen Siliziumblöcken (4) nach Anspruch 2, wobei ein weiterer Gasbläser (5) unter der Lauffläche (2a) des Förderbands (2) in Gitterform angeordnet ist.

4. Vorrichtung zur Herstellung von gereinigten zerkleinerten polykristallinen Siliziumblöcken (4) nach Anspruch 3, wobei die Gasbläser (5) an mindestens drei Positionen angeordnet sind, wobei ein erster von ihnen über der Lauffläche (2a) stromaufwärts der Laufrichtung des Förderbands (2) angeordnet ist und ein zweiter von ihnen unter der Lauffläche (2a) stromabwärts davon angeordnet ist und ein dritter von ihnen über der Lauffläche (2a) weiter stromabwärts davon angeordnet ist.

5. Vorrichtung zur Herstellung von gereinigten zerkleinerten polykristallinen Siliziumblöcken (4) nach einem der Ansprüche 2 bis 4, wobei mindestens ein Gasbläser (5) jeweils über und unter der Lauffläche (2a) des Förderbands (2) an den gleichen Positionen in Bezug auf die Laufrichtung des Förderbands (2) angeordnet ist.

6. Vorrichtung zur Herstellung von gereinigten zerkleinerten polykristallinen Siliziumblöcken (4) nach einem der Ansprüche 1 bis 5, umfassend einen Mechanismus zum Bewegen des Gasbläsers (5) in der Breitenrichtung des Förderbands (2), während das Gas geblasen wird.

7. Vorrichtung zur Herstellung von gereinigten zerkleinerten polykristallinen Siliziumblöcken (4) nach einem der Ansprüche 1 bis 6, wobei die Gasbläser (5) eine Blasmenge pro Bläseröffnungseinheitsfläche, gemessen in mm², von 8 bis 82 L/min aufweisen.

8. Vorrichtung zur Herstellung von gereinigten zerkleinerten polykristallinen Siliziumblöcken (4) nach einem der Ansprüche 3 bis 5 oder 7, wobei eine Entladungsvorrichtung (11) für ionisiertes Gas zum Entfernen der statischen Elektrizität der zerkleinerten polykristallinen Siliziumblöcke (4) weiter stromaufwärts als die Gasbläser (5) in der Laufrichtung des Förderbands (2) angeordnet ist.

9. Vorrichtung zur Herstellung von gereinigten zerkleinerten polykristallinen Siliziumblöcken nach einem der Ansprüche 3 bis 5, 7 oder 8, wobei an einer Position, an der die Gasbläser (5) angeordnet sind, und an einem Teil, an dem ein Gas von den Gasbläsern (5) das Förderband (2) berührt, in einem Gehäuse (10) untergebracht sind, das einen Auslass (9) an einem Wandteil umfasst.

10. Verfahren zur Herstellung von gereinigten zerkleinerten polykristallinen Siliziumblöcken (4) unter Verwendung der Vorrichtung zur Herstellung von gereinigten zerkleinerten polykristallinen Siliziumblöcken nach einem der Ansprüche 1 bis 9, umfassend einen Schritt des Blasens eines Gases auf die zerkleinerten polykristallinen Siliziumblöcke (4), die auf dem laufenden Förderband (2) angeordnet sind, und Entfernen der mit den zerkleinerten polykristallinen Siliziumblöcken (4) vermischten Feinpulver.

## Revendications

1. Dispositif pour la production de blocs de silicium polycristallin broyés nettoyés (4) comprenant,
a) un convoyeur (1) pour des blocs de silicium polycristallin broyés (4), et
b) un souffleur de gaz (5) placé au-dessus d'une surface de déplacement (2a) d'une bande de convoyeur (2) dudit convoyeur (1), et ledit souffleur de gaz (5) est destiné à souffler des poudres fines mélangées dans les blocs de silicium polycristallin broyés (4),
c) un treillis de prévention de la dispersion (7) pour lesdits blocs de silicium polycristallin broyés (4) qui est placé entre ladite surface de déplacement (2a) de ladite bande de convoyeur (2) et le souffleur de gaz (5) placé au-dessus de la surface de déplacement (2a), ledit treillis de prévention de la dispersion (7) étant agencé de sorte que les blocs de silicium polycristallin broyés (4) puissent se disperser sur la bande de convoyeur (2) en raison du gaz soufflé par ledit souffleur de gaz (5) et de manière à empêcher les blocs de silicium polycristallin broyés (4) de tomber de la bande de convoyeur (2),
**caractérisé en ce que** ledit souffleur de gaz (5) est agencé de sorte que le souffleur de gaz (5) souffle le gaz à travers le treillis de prévention de la dispersion (7) sur toute la surface dans le sens de la largeur de la bande (2).

2. Dispositif pour la production de blocs de silicium polycristallin broyés nettoyés (4) selon la revendication 1, dans lequel ladite bande de convoyeur (2) est en forme d'un treillis.

3. Dispositif pour la production de blocs de silicium polycristallin broyés nettoyés (4) selon la revendication 2, dans lequel un autre souffleur de gaz (5) est placé en dessous de ladite surface de déplacement (2a) de ladite bande de convoyeur (2) en forme d'un treillis.

4. Dispositif pour la production de blocs de silicium polycristallin broyés nettoyés (4) selon la revendication 3, dans lequel lesdits souffleurs de gaz (5) sont placés au moins à trois positions lorsque le premier d'entre eux est placé au-dessus de ladite surface de déplacement (2a) en amont du sens de déplacement de ladite bande de convoyeur (2), et le deuxième d'entre eux est placé en dessous de ladite surface de déplacement (2a) en aval de celle-ci, et le troisième d'entre eux est placé au-dessus de ladite surface de déplacement (2a) plus en aval de celle-ci.

5. Dispositif pour la production de blocs de silicium polycristallin broyés nettoyés (4) selon l'une quelconque des revendications 2 à 4, dans lequel au moins un souffleur de gaz (5) est respectivement placé au-dessus et en dessous de ladite surface de déplacement (2a) de ladite bande de convoyeur (2) aux mêmes positions par rapport au sens de déplacement de ladite bande de convoyeur (2).

6. Dispositif pour la production de blocs de silicium polycristallin broyés nettoyés (4) selon l'une quelconque des revendications 1 à 5, comprenant un mécanisme pour déplacer ledit souffleur de gaz (5) dans le sens de la largeur de ladite bande de convoyeur (2) tout en soufflant le gaz.

7. Dispositif pour la production de blocs de silicium polycristallin broyés nettoyés (4) selon l'une quelconque des revendications 1 à 6, dans lequel lesdits souffleurs de gaz (5) ont la quantité de soufflage par unité d'ouverture de souffleur, mesurée en mm², de 8 à 82 L/min.

8. Dispositif pour la production de blocs de silicium polycristallin broyés nettoyés (4) selon l'une quelconque des revendications 3 à 5 ou 7, dans lequel un déchargeur de gaz ionisé (11) pour éliminer l'électricité statique des blocs de silicium polycristallin broyés (4) est placé plus en amont que lesdits souffleurs de gaz (5) dans le sens de déplacement de ladite bande de convoyeur (2).

9. Dispositif pour la production de blocs de silicium polycristallin broyés nettoyés selon l'une quelconque des revendications 3 à 5, 7 ou 8, dans lequel à une position où lesdits souffleurs de gaz (5) sont placés, et à une partie où un gaz provenant desdits souffleurs de gaz (5) entre en contact avec ladite bande de convoyeur (2) sont logés dans une caisse (10) comprenant une sortie (9) au niveau d'une partie de paroi.

10. Procédé de production de blocs de silicium polycristallin broyés nettoyés (4) en utilisant le dispositif pour la production de blocs de silicium polycristallin broyés nettoyés selon l'une quelconque des revendications 1 à 9, comprenant une étape de soufflage d'un gaz vers lesdits blocs de silicium polycristallin broyés (4) placés sur la bande de convoyeur (2) en déplacement, et d'élimination de ladite poudre fine mélangée dans les blocs de silicium polycristallin broyés (4).
